**Europäisches Patentamt**

**European Patent Office**

**Office européen des brevets**

(19)

(11) Veröffentlichungsnummer : **0 061 066**
**B1**

(12)

# EUROPÄISCHE PATENTSCHRIFT

(45) Veröffentlichungstag der Patentschrift :
26.06.85

(21) Anmeldenummer : **82101884.3**

(22) Anmeldetag : **09.03.82**

(51) Int. Cl.⁴ : **A 01 C  5/02**

(54) **Rillenzieher.**

(30) Priorität : **24.03.81 DE 8108616 U**

(43) Veröffentlichungstag der Anmeldung :
**29.09.82 Patentblatt 82/39**

(45) Bekanntmachung des Hinweises auf die Patenterteilung : **26.06.85 Patentblatt 85/26**

(84) Benannte Vertragsstaaten :
**BE FR NL**

(56) Entgegenhaltungen :
**DE-C-  455 768**
**DE-C-  832 349**
**FR-A-  589 519**
**Prospekt "Wolf-Geräte", Dr.-Nr. 0172/Bur./1100**

(73) Patentinhaber : **Wolf-Geräte GmbH**
**Gregor-Wolf-Strasse Postfach 860 und 880**
**D-5240 Betzdorf/Sieg (DE)**

(72) Erfinder : **Kolb, Walter**
**Martin-Luther-Strasse 51**
**D-5240 Betzdorf/Sieg (DE)**
Erfinder : **Weid, Helmut**
**Am Koppelberg 2**
**D-5241 Niederdreisbach (DE)**

(74) Vertreter : **Koch, Günther, Dipl.-Ing. et al**
**Patentanwälte Dipl.-Ing. C. Wallach Dipl.-Ing. G. Koch, Dr. T. Halbach Dipl.-Ing. R. Feldkamp Postfach 920**
**D-8000 München 33 (DE)**

## Beschreibung

Die Erfindung bezieht sich auf einen Rillenzieher zum Ziehen von Saatrillen mit einem mit einer Stielrille verbundenen, quer zum Stiel verlaufenden Trägerrohr, auf dem drehfest, aber axial verschiebbar und in unterschiedlichen Abständen zueinander festlegbare und abnehmbare Scharen angeordnet sind. Bei einem bekannten in dem Prospekt « Wolf-Geräte » Dr.-Nr. 0172/Bur./1100 Seite 45 dargestellten Rillenzieher dieser Bauart sind die Scharen im Kopfteil mit Gewindelöchern versehen, durch die von vorn her Klemmschrauben einschraubbar sind. Eine ähnliche Klemmschraubenbefestigung weist der Rillenzieher gemäß DE-C-455 768 auf, bei welcher eine Flügelmutter auf jeweils einen Schraubbolzen aufschraubbar ist, der am Querträgerprofil verschiebbar angeordnet ist. Die Betätigung derartiger Klemmschrauben erfordert eine nicht unerhebliche Kraft in den Fingern, um die erforderliche Klemmwirkung herzustellen oder die Verklemmung zu lösen. Dies ist insbesondere dann der Fall, wenn die Klemmschrauben längere Zeit nicht betätigt wurden und einrosten konnten. Dann sind die Schrauben häufig nur mit Werkzeugen zu lösen und wieder anzuziehen, wobei die Gefahr des Abbrechens und des Durchdrehens der Gewinde besteht. Selbst bei leichtgängigen Klemmschrauben ist die Handhabung bei der Einstellung des gegenseitigen Abstandes der Scharen schwierig.

Der Erfindung liegt daher die Aufgabe zugrunde, einen Rillenzieher der gattungsgemäßen Bauart derart zu verbessern, daß bei zuverlässiger Fixierungen der Scharen am Trägerrohr eine leichte Verschiebbarkeit und Montage ohne Schraubbefestigung gewährleistet ist.

Gelöst wird die gestellte Aufgabe durch die im Kennzeichnungsteil des Patentanspruchs 1 angegebenen Merkmale.

Durch die Erfindung wird es möglich, die Verklemmung einfach durch Knopfdruck zu lösen und bei gedrücktem Knopf die Schar beliebig zu verschieben. Nach Loslassen des Knopfes ist die Schar an der gewählten Stelle des Querrohres wieder fixiert, weil die Feder automatisch die Klemmverbindung durch Kraftschluß herstellt. Diese Kraftschluß-Fixierung kann durch eine Formschlußfixierung gemäß Patentanspruch 3 unterstützt werden, wenn in vorbestimmten Abständen Rastkerben im Querrohr vorgesehen sind, die außerdem eine gleichmäßige Abstandseinstellung der Scharen ermöglicht.

Es ist zwar durch die DE-C-832 349 bereits ein Rillenzieher bekannt, bei dem die Scharen ohne Schraubbefestigung an verschiedenen Stellen des Querträgers befestigt werden können. Die Festlegung erfolgt hierbei durch Klemmkeile aus Blech, deren Handhabung ebenfalls relativ umständlich ist und den Einsatz eines Werkzeuges, d. h. eines Hammers erfordert.

Auch hier besteht die Gefahr des Festrostens der Keile, was bei dem erfindungsgemäßen Rillenzieher nicht zu befürchten ist, insbesondere wenn gemäß den Merkmalen des Anspruchs 5 der Einsatzkörper aus Plastikmaterial besteht.

Bei sämtlichen vorstehend erwähnten Rillenziehern war der Stiel, bzw. die Stieltülle fest rechtwinklig zum Trägerrohr verlaufend angeordnet, was bedingte, daß die den Rillenzieher führende Person über das Beet schreiten mußte, in das die Rillen gezogen werden sollten. Diese Nachteile bekannter Rillenzieher werden gemäß der Erfindung vermieden durch die Merkmale des Anspruchs 8.

Durch diese Maßnahme wird es möglich, den Stiel gegenüber dem Trägerrohr derart schräg zu stellen, daß die Bedienungsperson seitlich am Beet vorbeischreiten und die Rillen bequem in Längsrichtung des Beetes ziehen kann.

Weitere zweckmäßige Ausgestaltungen des Schwenkgelenkes ergeben sich aus den Unteransprüchen 9 bis 10.

Nachstehend wird ein Ausführungsbeispiel der Erfindung anhand der Zeichnung beschrieben. In der Zeichnung zeigen :

Figur 1 eine Ansicht des Rillenziehers (ohne Scharen),

Figur 2 eine teilweise geschnittene Ansicht einer auf dem Trägerrohr sitzenden Schar mit Klemmvorrichtung,

Figur 3 in größerem Maßstab eine Ansicht des in Fig. 1 mit III gekennzeichneten Teils des Rillenziehers,

Figur 4 einen Schnitt nach der Linie IV-IV gemäß Fig. 3.

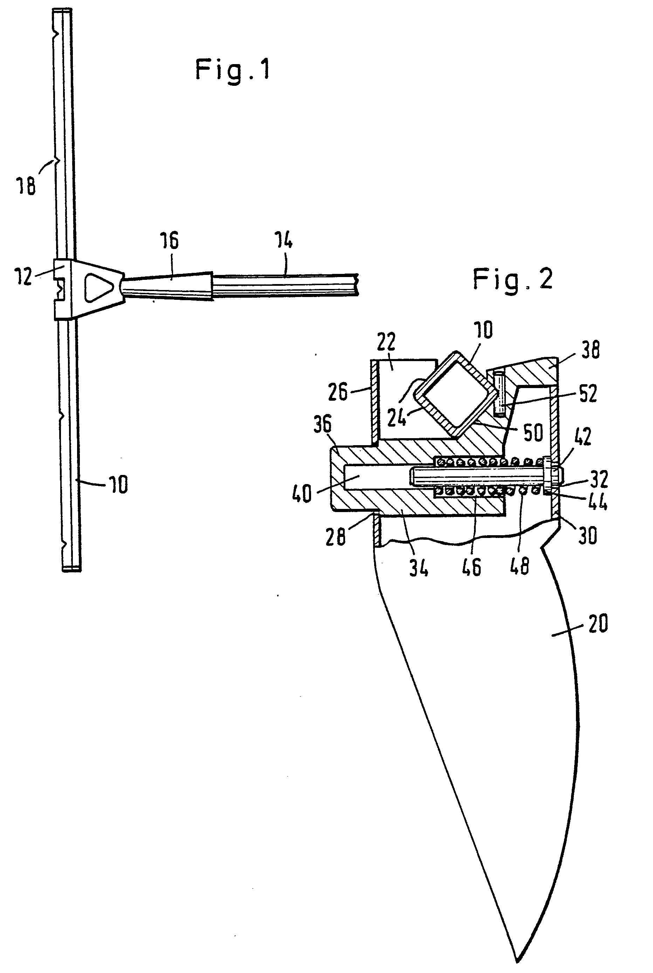

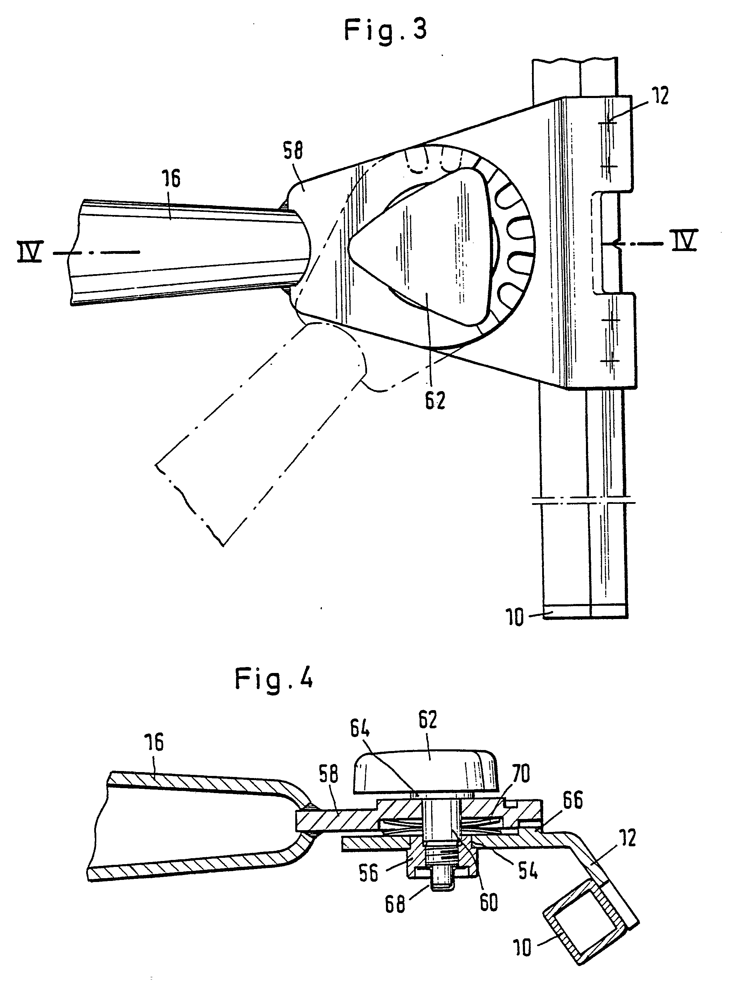

Der Rillenzieher gemäß Fig. 1 weist ein Trägerrohr 10 mit quadratischem Querschnitt auf, an welchem eine Gelenkplatte 12 verschweißt ist, die mit der zum Einsatz des Stieles 14 dienenden Geräteanschlußtülle 16 über ein Drehgelenk verbunden ist, welches in den Fig. 3 und 4 im einzelnen dargestellt ist. Das Trägerrohr 10 weist in vorbestimmten gleichmäßigen Abständen Kerben auf, in die Rastmittel der Scharen eingreifen können, von denen eine in Fig. 2 im Teilschnitt dargestellt ist. Diese Schar 20, die aus Blech besteht, weist ein Kopfteil in den zwei Seitenwänden 22 (von denen in Fig. 2 nur eine, nämlich die hintere Wand, dargestellt ist) auf, die einen auf den Querschnitt des Rohres 10 abgestimmten V-Einschnitt 24 aufweisen. Der Kopfteil jeder Schar 20 weist in der einstückig mit den Seitenwänden 22 hergestellten Vorderwand 26 ein Einsatzloch 28 und axial hierauf ausgerichtet in der Rückwand 30 ein Führungsloch 32 auf. Ein aus Kunststoff bestehendes Klemmstück 34 steht mit einem Handhabedruckknopf 36 durch das Einsatzloch 28 der Vorderwand 26 nach außen vor. Ein Ansatz 38 des Klemmstückes 34 steht durch eine Ausnehmung der Rückwand 30 vor und ist in dieser verschiebbar. Der Handhabedruckknopf 36 weist ein koaxiales Führungsloch 40 für einen Führungsbolzen 42 auf, der mit seinem Ende in das Führungsloch 32 einsteht. Zwischen einem auf dem Führungsbolzen 42 festgelegten Federteller 44 und einem Ringbund einer Locherweiterung 46 ist eine den Führungsbolzen 42 umschlingende Druckschraubenfeder 48 angeordnet.

Das Klemmstück 34 weist ferner ein V-förmiges Klemmprofil 50 auf, dessen Scheitel von einem Zylinderkerbstift 52 durchsetzt ist. Dieses Klemmprofil 50 wird durch die Feder 48 gegen das Trägerrohr 10 gepreßt, wobei der Kerbstift 52 zweckmäßigerweise in jeweils einer der Kerben 18 zu liegen kommt.

Zum Lösen der Klemmvorrichtung wird der Handhabedruckknopf 36 entgegen der Wirkung der Feder 48 eingedrückt, so daß das V-förmige Klemmprofil 50 von dem Trägerrohr 10 abgehoben wird. Nunmehr kann die Schar 20 auf dem Trägerrohr 10 beliebig verschoben oder von diesem abgenommen werden.

Bei der Montage kann das Klemmstück auf einfache Weise in das aus abgebogenem Blech bestehende Kopfteil von innen her eingefügt werden, wobei nach Eingreifen des Endes des Führungsbolzens 42 in das Führungsloch 32 das Klemmstück 34 fixiert ist und in Richtung der Achse des Führungsbolzens 42 auf diesem verschoben werden kann.

Die abgewinkelte Gelenkplatte 12 ist durch Punktverschweißung in der Mitte des Trägerrohres 10 festgelegt. In eine Bohrung 54 der Gelenkplatte 12 ist eine Mutter 56 eingepreßt oder eingeschweißt. Ein mit der Geräteanschlußtülle 16 verbundener Gelenkhalter 58 liegt über der Gelenkplatte 12 und weist ein Einsatzloch auf, durch das ein in die Mutter 56 einschraubbarer Schraubbolzen 60 hindurchsteht, dessen Kopf 62 als Handhabe ausgebildet ist und mit einem Spannbund 64 dem Gelenkhalter 58 von oben her anliegt.

Der Gelenkhalter 58 besitzt nach innen geprägte Rastlücken, die auf Rastnasen 66 der Gelenkplatte 12 abgestimmt sind und auf einem zur Gelenkachse konzentrischen Kreisbogen liegen. Der Schraubbolzen 60 ist durch ein Befestigungselement 68 gegen Herausdrehen gesichert. Zwischen der Gelenkplatte und dem Gelenkhalter ist eine Tellerfeder 70 eingefügt.

Durch das mittels der Stellschraube 60, 62 festlegbare Gelenk läßt sich der Stiel gegenüber dem Trägerrohr 10 in verschiedenen Winkelstellungen einstellen, von denen zwei Stellungen in Fig. 3 angedeutet sind. Wird die Schraube 60, 62 gelöst, so drückt die Tellerfeder 70 den Gelenkhalter 58 von der Gelenkplatte 12 ab, so daß die Rastnasen 66 außer Eingriff kommen. Durch Drehen des Gelenks nach links oder rechts wird der Winkel zwischen Geräteanschluß und Gerät verändert. Wenn die gewünschte Einstellung erreicht ist, wird durch Festdrehen der Schraube das Gelenk arretiert. Auf diese Weise können von einem seitlichen Weg des Beetes her bequem Rillen gezogen werden, ohne daß es notwendig wäre, das Beet selbst zu betreten.

**Patentansprüche**

1. Rillenzieher zum Ziehen von Saatrillen mit einem mit einer Stieltülle (16) verbundenen, quer zum Stiel (14) verlaufenden Trägerrohr (10), auf dem drehfest, aber axial verschiebbar und in unterschiedlichen Abständen zueinander festlegbare und abnehmbare Scharen (20) angeordnet sind, dadurch gekennzeichnet, daß jede Schar (20) ein Klemmstück (34) aufweist, das durch eine Feder (48) gegen das Trägerrohr (10) vorgespannt ist und einen nach außen vorstehenden Auslöse-Handhabe-Druckknopf (36) aufweist, der entgegen der Wirkung der Feder (48) eindrückbar ist.

2. Rillenzieher nach Anspruch 1, mit einem im Querschnitt quadratischen Trägerrohr, dadurch gekennzeichnet, daß der Kopfteil jeder Schar (20) einerseits und das Klemmstück (34) andererseits V-förmige Klemmprofil-Ausschnitte (24 bzw. 50) aufweist, die der quadratischen Querschnittsform des Trägerrohres (10) angepaßt sind und durch die Feder im gegenseitigen Eingriff gehalten sind.

3. Rillenzieher nach Anspruch 2, dadurch gekennzeichnet, daß das Trägerrohr in vorbestimmten Abständen Rastkerben (18) aufweist, in die Rastvorsprünge (52) des Klemmstückes (34) einpassen.

4. Rillenzieher nach Anspruch 3, dadurch gekennzeichnet, daß die Rastvorsprünge als Zylinderkerbstifte (52) ausgebildet sind, die den Scheitel des V-förmigen Klemmprofils (50) durchsetzen.

5. Rillenzieher nach einem der Ansprüche 1 bis 4, dadurch gekennzeichnet, daß das Klemmstück (34) aus einem Einsatzkörper aus Plastikmaterial besteht, der im Kopfteil der Schar (20) geführt ist.

6. Rillenzieher nach Anspruch 5, dadurch gekennzeichnet, daß das Klemmstück (34) auf einem Führungsbolzen (42) verschiebbar ist, welcher in ein Führungsloch (32) des Kopfstückes eingreift.

7. Rillenzieher nach den Ansprüchen 1 und 6, dadurch gekennzeichnet, daß die Vorspannfeder (48) als Druckschraubenfeder ausgebildet ist und auf den Führungsbolzen (42) aufgezogen ist und daß sich diese Feder (48) gegen eine Bohrungsstufe des Klemmstückes und einen Federteller des Führungsbolzens abstützt.

8. Rillenzieher, insbesondere nach Anspruch 1, dadurch gekennzeichnet, daß zwischen Trägerrohr (10) und Geräteanschlußtülle (16) ein in verschiedenen Winkelstellungen fixierbares Schwenkgelenk (12, 58, 60, 62) angeordnet ist.

9. Rillenzieher nach Anspruch 8, dadurch gekennzeichnet, daß das Schwenkgelenk eine Bohrung eines mit der Gerätetülle (16) verbundenen Gelenkhalters (18) aufweist, durch die ein Schraubbolzen (60) hindurchsteht, der in ein Muttergewinde (54) einschraubbar ist, welches an einer mit dem Trägerrohr (10) verbundenen Gelenkplatte (12) vorgesehen ist, und daß der Schraubbolzen (60) einen als Handhabe wirkenden Kopf (62) aufweist.

10. Rillenzieher nach Anspruch 9, dadurch gekennzeichnet, daß zwischen Gelenkhalter (58) und Gelenkplatte (12) Rastausnehmungen bzw. Rastnasen (66) auf einem Kreisbogen um die Gelenkachse vorgesehen sind, die bei angezogener Schraube formschlüssig ineinander greifen, und daß zwischen Gelenkhalter (58) und Gelenkplatte (12) auf den Schraubbolzen (60) eine Druckschraubenfeder in Gestalt einer Tellerfeder (70) angeordnet ist.

## Claims

1. Furrow opener for making furrows comprising a support tube (10) which is connected to a handle socket (16) and extends transversely of the handle (14) and on which are disposed non-rotatably but axially displaceably removable blades (20) which can be secured at various spacings apart, characterized in that each blade (20) comprises a clamp member (34) which is biased by a spring (48) against the support tube (10) and comprises an outwardly projecting release manual control pushbutton (36) which is adapted to be pressed in against the action of the spring (48).

2. Furrow opener according to claim 1 comprising a support tube of square cross-section, characterized in that the head portion of each blade (20) on the one hand and the clamping member (34) on the other hand comprise V-shaped clamping profile cutouts (24, 50) which are adapted to the square cross-sectional form of the support tube (10) and held in mutual engagement by the spring.

3. Furrow opener according to claim 2, characterized in that the support tube comprises at predetermined intervals notches (18) into which detent projections (52) of the clamping member (34) fit.

4. Furrow opener according to claim 3, characterized in that the detent projections are formed as cylindrical grooved pins (52) which pass through the apex of the V-shaped clamping profile (50).

5. Furrow opener according to any one of claims 1 to 4, characterized in that the clamping member (34) consists of an insert body of plastic material which is led in the head portion of the blade (20).

6. Furrow opener according to claim 1, characterized in that the clamping member (34) is displaceable on a guide bolt (42) which engages in a guide hole (32) of the head portion.

7. Furrow opener according to claims 1 and 6, characterized in that the biasing spring (48) is constructed as helical pressure spring and drawn onto the guide bolt (42) and that said spring (48) bears against a bore step of the clamping member and a spring washer of the guide bolt.

8. Furrow opener in particular according to claim 1, characterized in that between the support tube (10) and the tool connecting socket (16) a pivot joint (12, 58, 60, 62) lockable in various angular positions is disposed.

9. Furrow opener according to claim 8, characterized in that the pivot joint comprises a bore of a joint holder (18) connected to the tool socket (16) through which a bolt (60) passes which is adapted to be screwed into a nut thread (54) which is provided at a joint plate (12) connected to the support tube (10) and that the bolt (60) has a head (62) acting as manual actuating member.

10. Furrow opener according to claim 9, characterized in that between the joint holder (58) and joint plate (12) detent recesses or detent noses (66) are provided on an arc about the joint axis and when the screw is tightened interengage in form-locking manner, and that between the joint holder (58) and the joint plate (12) on the bolt (60) a helical pressure spring in the form of a spring washer (70) is disposed.

## Revendications

1. Rayonneur, servant à tracer des raies d'ensemencement, qui comporte un tube portant (10) transversal au manche (14) et fixé à une douille (16) du manche, tube portant sur lequel sont montés, sans possibilité de rotation mais avec possibilité de déplacement dans le sens axial, des socs (20) pouvant être fixés à différentes distances l'un par rapport à l'autre et pouvant être enlevés, caractérisé en ce que chaque soc (20) comporte une pièce de serrage (34) qui, par un ressort (48) est serrée contre le tube portant (10) sous l'effet d'une tension préalable et qui est munie d'un bouton poussoir de manipulation à déclic (36) faisant saillie vers l'extérieur, qui peut être pressé à l'encontre de l'action du ressort (48).

2. Rayonneur suivant la revendication 1, comportant un tube portant de section transversale carrée, caractérisé en ce que la partie de tête de chaque soc (20) d'une part, et la pièce de serrage (34), d'autre part, présentent des découpures de profil de serrage en forme de V (24, et 50, respectivement) qui sont adaptées à la forme de section transversale carrée du tube portant (10) et qui sont maintenues en engagement réciproque par le ressort.

3. Rayonneur suivant la revendication 2, caractérisé en ce que le tube portant présente à des distances préalablement déterminées des encoches d'arrêt (18) auxquelles s'adaptent des saillies d'arrêt (52) de la pièce de serrage (34).

4. Rayonneur suivant la revendication 3, caractérisé en ce que les saillies d'arrêt se présentent sous la forme de broches cannelées cylindriques (52) qui traversent le sommet du profil de serrage en V (50).

5. Rayonneur suivant l'une quelconque des revendications 1 à 4 caractérisé en ce que la pièce de serrage (34) est constituée par un élément de montage fait de matière plastique qui est guidé dans la partie de tête du soc (20).

6. Rayonneur suivant la revendication 5, caractérisé en ce que la pièce de serrage (34) peut être déplacée sur une tige de guidage (42) qui s'engage dans une ouverture de guidage (32) de la pièce de tête.

7. Rayonneur suivant les revendications 1 et 6, caractérisé en ce que le ressort de tension préalable (48) se présente sous la forme d'un ressort hélicoïdal de pression et est posé sur la tige de guidage (42) et en ce que ce ressort (48) prend appui sur un épaulement du passage de la pièce de serrage et sur une assiette de ressort que porte la tige de guidage.

8. Rayonneur, en particulier suivant la revendication 1, caractérisé en ce qu'entre le tube portant (10) et la douille (16) de raccord de l'appareil est montée une articulation pivotante (12, 58, 60, 62) qui peut être fixée dans différentes positions angulaires.

9. Rayonneur suivant la revendication 8, caractérisé en ce que l'articulation pivotante comporte un passage d'un support d'articulation (58) qui est fixé à la douille (16) de l'appareil, passage par lequel passe une tige filetée (60), qui peut être vissée dans un filet d'écrou (54) qui est prévu à une plaque d'articulation (12) fixée au tube portant (10), et en ce que la tige filetée (60) est munie d'une tête (62) servant d'organe de manipulation.

10. Rayonneur suivant la revendication 9, caractérisé en ce qu'entre le support d'articulation (58) et la plaque d'articulation (12), il est prévu respectivement des creux d'arrêt et des nez d'arrêt (66) se trouvant sur un arc de cercle autour de l'axe d'articulation, qui se placent en engagement par adaptation de formes lorsque la vis est serrée, et en ce qu'entre le support d'articulation (58) et la plaque d'articulation (12), sur la tige filetée (60), il est prévu un ressort de pression se présentant sous la forme d'un ressort Belleville (70).

# Fig.1

# Fig.2

## Fig. 3

## Fig. 4